Europäisches Patentamt

European Patent Office

Office européen des brevets

(11) Publication number: **0 246 363**
**B1**

(12) **EUROPEAN PATENT SPECIFICATION**

(45) Date of publication of patent specification: **14.03.90**

(51) Int. Cl.⁵: **G 01 G 19/10**

(21) Application number: **86200869.5**

(22) Date of filing: **21.05.86**

(54) **Method and apparatus for weighing loads lifted by hydraulic devices.**

(43) Date of publication of application:
**25.11.87 Bulletin 87/48**

(45) Publication of the grant of the patent:
**14.03.90 Bulletin 90/11**

(84) Designated Contracting States:
**AT BE CH DE FR GB IT LI LU NL SE**

(56) References cited:
**DE-A-2 364 335**
**US-A-4 588 038**

**PATENTS ABSTRACTS OF JAPAN, vol. 7, no. 90**
**(P-191)1235r, 14. April 1983; & JP-A-58 17 321**
**(FUJITA KOGYO K.K.) 01-02-1983**

(73) Proprietor: **OGNIBENE OLMES**
**3, Via 7 Gennaio**
**I-42011 Bagnolo In Piano (IT)**

(72) Inventor: **OGNIBENE OLMES**
**3, Via 7 Gennaio**
**I-42011 Bagnolo In Piano (IT)**

(74) Representative: **Corradini, Corrado**
**STUDIO SECCHI & CORRADINI 4, Via Dante**
**Alighieri**
**I-42100 Reggio Emilia (IT)**

Courier Press, Leamington Spa, England.

**Description**

The present invention relates to a method and an apparatus which permit to measure in a very accurate manner, the weight of loads which are lifted by hydraulic devices such as for instance a dolly elevator.

It is well known that in many industrial and commercial sectors the necessity exists of weighing substantial quantities of material which may be finished products, merchandise and semi-finished articles.

This step of weighing is necessary for a number of reasons, for instance, to determine the overall price of the merchandise, to determine the cost of labor of a substantial number of unfinished or semi-finished items which are delivered to other companies which will take care of the external transformations, to determine the cost of transportation of the same quantity of merchandise, to comply with the limits of the load of transportation means and/or also for a correct listing of the documents which must accompany the merchandise up to the place of delivery/unloading.

Up to the present time, the weighing of substantial quantities of merchandise has been carried out by means of fixed weighing devices which frequently are located at a substantial distance from the place where the merchandise to be weighed is located.

For the purpose of avoiding the substantial problems involved in a similar system of weighing, in view of the fact that these great loads or substantial quantities of merchandise are generally moved by means of hydraulic devices such as dolly elevators, the proposal has been made to carry out the weighing step simultaneously with the movement of the merchandise by means of the hydraulic devices.

According to known proposal, there is used a transducer of pressure which is associated with the flat car of the hydraulic device being used for lifting the merchandise, this transducer being capable of generating an electric signal proportional to the weight being lifted, the electric signal being then read after appropriate conversion on a scale which reports the weights of the merchandise.

The reading of the weight is carried out during the step of lifting the load, a fact which causes a very substantial inaccuracy in the measurements due to the inertia of the load being lifted and also the losses due to friction of the system.

For the purpose of avoiding this drawback, the proposal has been made to read the weight after a certain amount of time, that is when the flat car has completed the lifting course, so that it is possible to correct the losses due to friction through an appropriate calibration of the device.

The correction mentioned hereinabove, however, does not eliminate the errors due to the drawing of the fluid being used during the lifting step.

In fact, the flat car with its load, after it has come to a stop, is subject to an oscillatory condition during which forces of inertia which are not negligible play a substantial role and even after this condition has ended, the fluid drawn between the sealing elements still causes an error in the value of the pressure.

This fact has made the known weighing devices which use this method essentially inoperative because it is practically impossible to have a sufficiently accurate reading of the weight instantaneously and also after a certain amount of time gone by, the reading is not accurate.

One object of the present invention is to provide a method and an apparatus which permit to eliminate the drawbacks mentioned hereinabove because the method and the apparatus permit to carry out a measurement of the weight essentially instantaneously with values which deviate from the real weight by an amount which is essentially negligible.

In accordance with the present invention as claimed, the method permits to carry out by means of a pressure transducer, a first approximate weighing of the load at the end of the lifting stage of the load, a weighing which does not take into account the forces of inertia and friction.

Then, in a second step, a series of successive measurements is carried out when the load is caused to be lowered for a period of time the duration of which is inversely proportional in a linear fashion to the value of the first weighing or it is fixed but still comprised between 80 and 800 milliseconds.

The method also involves the step of mathematically filtering and determining the average of the values of each series, leaving out the values which differ from the average pressure by an amount superior to a preestablished and acceptable reject value which may be evaluated between 0.8% and 1.2% with respect to the average value.

Finally, the method involves the step of determining the average of the average values measured previously and comparing the result with a table which gives the relationship between the pressure and the weight stored in a processor and interpolating the values of the table in order to determine the actual weight of the load.

This table is prepared by calibration for every type of machine load or machines with known weights and proceeding according to the above procedure.

The successive lowerings of the load have a duration of time which is inversely proportional to the approximate value of the weight of the load which has been lifted and this is for the purpose of maintaining the effects of the forces of inertia of the masses in motion contained in a limited field so as not to cause damage to the pressure transducer.

In other words, during the stages of lowering the load, the fluid which supports the load is subjected to forces of inertia and to an impulse which is substantially constant no matter what the weight of the load is and which may, therefore, be predetermined with a good approximation.

Alternately, the successive lowerings may have a duration which is independent of the load, but still comprised between 80 and 800 milliseconds.

It is, therefore, foreseen that each one of these series of successive weighings carried out at the end of an increment of time of lowering of the load be characterized by pressures which do not exceed the values tolerated by the transducer and this condition is maintained independently of the load.

In addition, the curves of the pressure during the oscillations of the transitory condition are all similar, with values which are the maximum and the minimum and with periods which are comparable among themselves.

The apparatus comprises, according to the invention as claimed, a valve which is ordinarily closed and which is located along an unloading conduit, the latter being connected in parallel to the feeding branch of an hydraulic device for lifting the load such as the cylinder piston group of a dolly elevator, as well as a reading element of the pressure which exists upstream of the same valve.

This reading element is connected to an electronic circuit capable of converting and elaborating the signals emitted by the reading element and capable of imparting a command, after the lifting of the weight has come to a stop, to at least one opening of the valve for a period of time which is inversely proportional to the weight of the load which has been lifted.

This valve comprises a precision electrovalve and a calibrated neck which is located downstream, the latter being capable of avoiding that the load and the supporting structure acquire an excessive speed when the valve is open.

In addition, the electronic circuit is connected to the valves as mentioned hereinabove, as well as to the means for presenting the weights which have been measured which are displayed visually after the processor has provided for extrapolation of the value of the curves of response described hereinabove and has provided for the elimination of the friction forces of the system from the measurements being carried out.

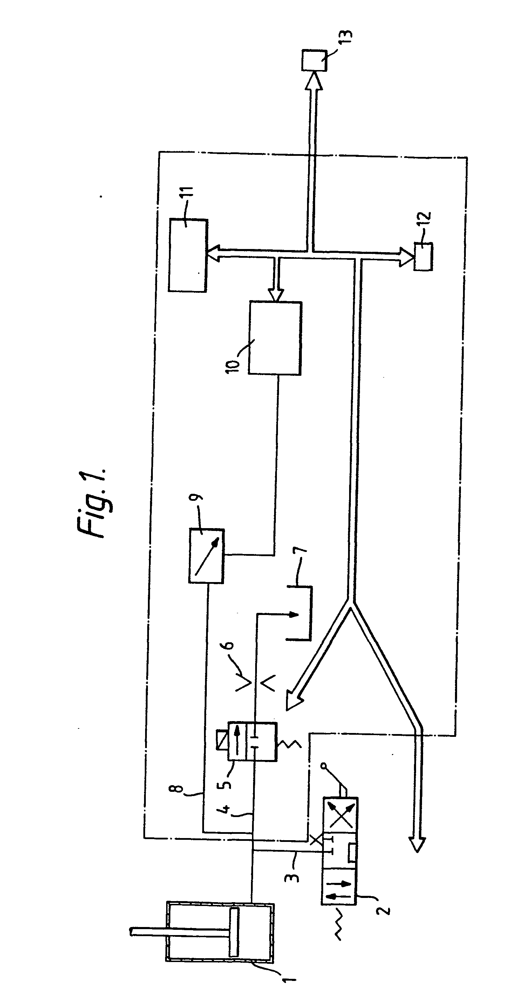

The present invention will be further clarified by the following description and drawings in which Fig. 1 is a block diagram of the apparatus used to carry out the method of this invention.

Fig. 2 illustrates the relationship between the duration of time and pressure.

Fig. 3 illustrates the change of pressure with time and shows the diminishing oscillation with increase in time.

It should be stressed that the method and the apparatus of the present invention may be used with every apparatus for lifting a load no matter whether the apparatus is fixed or semimovable where the lifting is carried out with an incompressible fluid, for instance hydraulic oil.

For instance, a hydraulic device of this type is the device of dolly elevators in which the fork is controlled by at least one hydraulic piston group.

In any event, even if in the description which follows, reference is being made specifically to a dolly elevator and to its component parts, this should not be construed as limiting the present invention because the method and apparatus may be adapted to any lifting device for a load involving the use of hydraulic means.

In Fig. 1, numeral 1 designates schematically a group 1 which is a hydraulic piston and which is arranged upstream of the device (not shown) used for lifting and lowering the load with the ordinary loading fork supporting the load as well as a hydraulic distributor 2 with a box for the command of the same group 1, this distributor 2 being connected to a hydraulic gearbox which provides oil under pressure (not shown).

Numeral 3 designates a conduit which connects group 1 to the distributor 2.

Tube 4 is connected to the conduit 3.

Along tube 4 are interposed a solenoid precision valve 5 as well as neck 6 downstream which is constituted of a calibrated orifice.

Tube 4 then unloads in reservoir 7 which contains the hydraulic oil placed originally to actuate group 1.

In actual practice, tube 4 is connected in parallel to the feeding-unloading branch of group 1.

Upstream of the electrovalve 5, tube 8 is connected to tube 4.

Tube 8 is connected at its end with an electric pressure transducer 9 capable of converting the values of the pressure present in 1 and 4 to an electrical value proportional to the value of the pressure.

Transducer 9 may be of every known type and the signals at the exit may be in the form of current or voltage.

For the sake of clarity in Fig. 1, tube 8 is connected to conduit 4 at a point situated sufficiently away from group 1 but in actual practice, tube 8 may be connected directly or may be very close to group 1 for the purpose of minimizing the losses of the load due to the hydraulic circuits of the connection.

This transducer 9 is connected at the end to a converter 10 which is constituted of a series of electronic circuits having high resolutions.

These circuits are arranged to amplify the incoming electrical signals and to convert the same from the initial analog form to a digital form.

The latter is then carried to circuit 11 which is an electronic processor circuit and to device 12 which displays the data.

As shown in Figure 1, the processor circuit 11 is also connected with electro-valve 5 and with sensors (not shown) provided in the dolly elevator as well as with other accessory electronic device which are generically designated by the numeral 13.

The processor circuit 11 is constituted by a microprocessor having an integrated circuit having suitable devices for the acquisition and transmission of data while the device for display of the data is constituted by an electronic visual display which may be of the type having liquid crystals or photoemitting dials or an equivalent type.

In addition, the sensors mentioned hereinabove are means for detection provided on the carriage for reasons of safety and control for the purpose of avoiding erroneous measurements due to the apparatus when the dolly elevator functions in an irregular manner.

For instance, these sensors may include tracer points of stop for group 1; means of detecting eventual permanent deformations which occur on the mobile structure of the carriage and means of the constant control of the feeding voltage and absorbed currents, that is an auto-diagnosis circuit.

In addition, the devices designated by numeral 13 are accessory electronic devices which may include peripheral units for collecting and displaying information inherent to the measurements carried out with the apparatus, for instance printing units, recorders, totalizers and units for the determination of the number of pieces which are accumulated in a random fashion in a load lifted by the carriage.

Other details with respect to units 10, 11, 12 and 13 are not being discussed herein because the characteristics and functions are well known to the people experienced in the field and who operate in the sector of acquisition/processing/transmission/display of data.

The method of weighing in accordance with the present invention will be described hereinbelow keeping in mind the details discussed hereinabove and additional details which will be provided.

At the outset, the method is based on the principle that in the case of an incompressible fluid, the pressure is transmitted in an identical manner in every direction.

The method is also based on the fact that once the area on which the pressure operates is known, it immediately follows to deduce the force induced from the pressure in that area and vice versa.

Therefore, the useful section or the section of thrust of group 1 is a constant value which is stored in the memory of the processor 11 and which constitutes the parameter which connect the pressures to the forces which are the same as the weights to be determined.

Further, in view of the fact that the measurements are carried out when the load being weighed is in motion, as it will be described hereinbelow, for the purpose of achieving a correct measurement, it its necessary to account for both the force of inertia, as well as the friction.

The apparatus described herein is adequate to carry out the method according to the present invention as follows.

When group 1 has completed the lifting of the forks on which the load to be weighed is placed, the operator gives the weighing command and by means of the group transducer/converter (9, 10), the processor carries out a first weighing of the load.

This value obviously is an approximate value due to the forces of inertia of the load as well as of the structure of the carriage which supports the load and also due to mechanical friction and losses of load along the conduits of the fluid under pressure.

However, the extent of approximation of this first value of the weight is sufficient to constitute the value expressed as pressure in the hydraulic jack which, after being processed the calculator, is converted into the duration of each increment of lowering of the load.

This duration is regulated by the following formula

$$T = h - k \cdot P$$

in which

T is the period of time expressed in msec (thousandths of seconds)

h is a constant having msec as dimension and may have a value comprised between 500 and 2000

k is a constant having as dimension milliseconds/bar and may have a value between 1 and 36

P is the pressure of the fluid in the elevator cylinder expressed in bar.

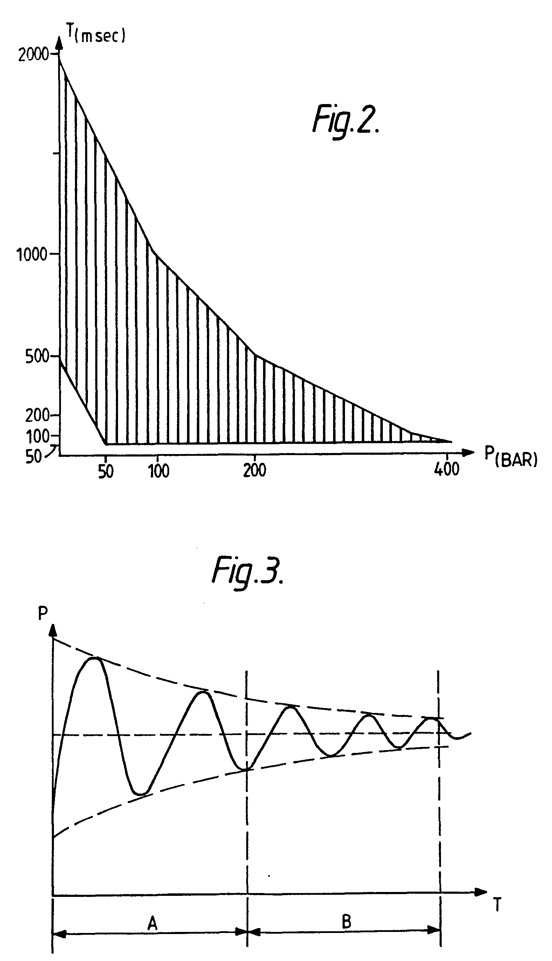

This equation is illustrated in Fig. 2.

At the end of the lifting phase the processor 11 commands with signals the opening and the closing of the electrovalve 5, the duration of each increment being determined by the equation indicated hereinabove as a function of the pressure relative to the first approximate weighing already stored by the processor 11.

Alternately, the duration of each increment may be fixed independently of the load but is always comprised between 80 and 800 msec.

According to the invention, the determinations of the values of the pressure from which the weight of the load is derived, are carried out when the load is stopped between one increment and another increment.

When the load has stopped at the end of the increment, the pressure (P) and the time (T) have a relationship according to Fig. 3 and follow an oscillatory decreasing curve.

The transducer begins reading the values of the pressure after a period of time (A) comprised between 1 and 2 seconds and during the period of time (B) which is about one second, carries out at least 16 and preferably 40 readings.

Due to the formula hereinabove

$$T = h - k \cdot P$$

which gives the duration of each increment of lowering as a function of the approximate weight of the load, at the end of each increment the quantity m . v (mass times velocity) of the load is about constant in spite of the variation of the mass (m) and, therefore, the weight (P).

This occurs in every instance even if with minor approximation, if the duration of each increment is between 80 and 800 m sec.

The average of the readings of the pressure is then determined and is measured after the period of time (A), that is after the oscillations are almost damped because the values of the pressure are initially selected to avoid eventual errors which are likely to occur unavoidably.

From this operation of mathematical selection and average, there are deduced at least eight values of pressure which are referred to hereinbelow as (PA).

These eight values (PA) are then averaged obtaining a value (PM) which is accepted for the successive elaborations only if it does not differ from the values (PA) of a quantity in excess of a prefixed reject value which is acceptable, which is between 0.8% and 1.2%.

In the contrary case, the measurement is disregarded.

The procedure as described hereinabove is repeated at least for two successive increments and preferably for at least five increments.

Then the arithmetical average of the values (PM) of each increment is calculated and this average is compared with the calibration table stored in the computer which gives the relationship between pressure and weight.

This table interpolated by the calculator permits to read the weight with an approximation of a few percents.

The calibration table is calculated for each machine carrying out according to the procedure described hereinabove, the weighing of known loads being done so that it is possible to make an approximate calibration of the apparatus.

## Claims

1. A method of weighing a load previously lifted by a device actuated by at least one hydrodynamic jack which comprises carrying out in an apparatus having a calibration table the following steps:

determining the value of the pressure of actuation of the jack at the end of the lifting phase of the load, storing the said value of the pressure in a data processor;

lowering the load at the end of the lifting stage by small increments;

carrying out at the end of each increment, after a delay of between 1 and 2 seconds, at least 16 determinations of the value of the pressure and transmitting said values to the processor;

selecting mathematically and averaging said at least 16 values of the pressure in groups of at least two to obtain at least 8 decreasing values;

averaging said eight values to obtain a value and discarding said value when it differs by an amount greater in percent than the value predetermined by each of said eight values;

repeating said procedure at the end of each increment averaging the accepted values to obtain an average and comparing said average by interpolation with the table of calibration of said apparatus.

2. Method according to claim 1 wherein the duration of each increment is independent of the load and is between 80 and 800 milliseconds.

3. Method according to claim 1 wherein the duration of each increment depends on the load and the equation which controls the duration of each increment expressed in milliseconds and the pressure expressed in bar of the jack at the end of the lifting phase is:

$$T = h - k \cdot P$$

where

T is the duration of each increment in milliseconds

h is a constant expressed in milliseconds and is between 500 and 2000,

k is a constant expressed in milliseconds bar and is between 1 and 36 and

P is the pressure in bar.

4. Method according to claim 1 wherein the percentage value of the maximum discard predetermined as acceptable is 1.2%.

5. Method according to claim 1 wherein during the lowering phase of the load, a hydraulic braking is carried out whereby the losses of the load are maintained constant as to very small weights as well as substantial weights.

6. An apparatus for weighing a load previously lifted by a lifting device which comprises a hydrodynamic jack (1), a conduit (3) connected with said jack for feeding and unloading said jack, a conduit (4) connected in parallel with said conduit (3), a valve (5), a neck (6) and a pressure transducer (9), a processor (11) being placed on said conduit (4), said processor (11) being capable of receiving through a converter the values of the pressure determined by said transducer (9) and being capable of processing said values and determining the value of weight of the load.

7. Apparatus according to claim 6 wherein said processor (11) commands the opening and closing of said valve (5).

8. Apparatus according to claim 6 wherein said transducer (9) is an electrical transducer capable of converting the values of the pressure into proportional signals of voltage or current.

9. Apparatus according to claim 6 wherein said processor (11) comprises means for storing the physicogeometrical data of the lifting group (1) and is capable of storing the constants of calibration of said apparatus and the signals transmitted by said transducer (9) and is capable of storing the means of processing of said data.

10. Apparatus according to claim 6 wherein said processor (11) comprises a printing element (12) capable of showing the results of the processor carried out as well as a unit (13) arranged peripherically capable of recording, totalizing and calculating the results.

## Patentansprüche

1. Verfahren zum Wiegen einer, vorher von einem mindestens durch einen hydrodynamischen Heber betätigten Vorrichtung, angehobenen Last, welches die Durchführung folgender Schritte in einer mit einer Eichtabelle versehenen Vorrichtung umfaßt:

Bestimmung des Wertes für den Druck (P) beim Betätigen des Hebers am Ende der Lasthebephase, und Speicherung dieses Druckwertes in einem Daten-Prozessor;

Absenken der Last am Ende des Hebevorganges in kleinen Schritten;

am Ende jedes Schrittes, nach einer Verzögerung von zwischen 1 und 2 Sekunden, Durchführung von mindestens 16 Bestimmungen des Druckes und Weiterleitung dieser Werte an den Prozessor;

diese mindestens 16 Druckwerte in Gruppen von mindestens zwei mathematisch auswählen und den Durchschnitt nehmen, um mindestens acht abnehmende Werte zu erhalten;

von den acht Werten den Durchschnitt nehmen, um einen Wert zu erhalten, und diesen Wert ausscheiden, wenn er um einen Betrag abweicht, der in Prozent größer ist als der von jedem der acht Werte vorbestimmte Wert;

Dieses Verfahren am Ende jedes Schrittes wiederholen, d.h. Durchschnittsbildung der aufgenommenen Werte, um einen Mittelwert zu erhalten und Vergleich dieses Mittelwertes durch Interpolation mit der Eichtafel der Vorrichtung.

2. Verfahren nach Anspruch 1, worin die Dauer jedes Schrittes unabhängig von der Last ist und zwischen 80 und 800 Millisekunden liegt.

3. Verfahren nach Anspruch 1, worin die Dauer jedes Schrittes von der Last abhängt und die Gleichung, welche am Ende der Hebephase die Dauer jedes Schrittes, ausgedrückt in Millisekunden bestimmt, mit dem Druck des Hebers ausgedrückt in bar, ist:

$$T = h - k \cdot P$$

worin

T=Dauer jedes Schrittes in Millisekunden,

h=Konstante in Millisekunden, im Bereich zwischen 500 und 2000,

k=Konstante in Millisekunden/bar, im Bereich zwischen 1 und 36, und

P=Druck in bar.

4. Verfahren nach Anspruch 1, worin der als zulässig vorbestimmte prozentuale Wert für den Ausschuß 1,2% ist.

5. Verfahren nach Anspruch 1, worin man während der Phase der Lastabsenkung hydraulisch bremst, wodurch die Druckverluste sowohl bei sehr kleinen als auch bei beträchtlichen Gewichten konstant bleiben.

6. Vorrichtung zum Wiegen einer vorher durch eine Hebevorrichtung angehobenen Last, welche folgendes aufweist:

einen hydrodynamischen Heber (1), eine mit diesem Heber verbundene Leitung (3) zum Speisen und Entlasten dieses Hebers, eine parallel mit der Leitung (3) verlegte Leitung (4), ein Ventil (5), eine Drossel (6) und einen Drucktransmitter (9), einen Prozessor (11), der in der Leitung (4) angeordnet ist, wobei dieser Prozessor (11) in der Lage ist, über einen Wandler die vom Transmitter (9) ermittelten Druckwerte aufzunehmen, diese Werte zu verarbeiten und das Gewicht der Ladung zu bestimmen.

7. Vorrichtung nach Anspruch 6, worin der Prozessor (11) das Öffnen und Schließen des Ventils (5) steuert.

8. Vorrichtung nach Anspruch 6, worin der Drucktransmitter (9) als elektrischer Transmitter in der Lage ist, die Druckwerte in proportionale Spannungs- oder Stromstärkesignale umzuwandeln.

9. Vorrichtung nach Anspruch 6, worin der Prozessor (11) Einrichtungen zum Speichern der physicogeometrischen Daten der Hubgruppe (1) aufweist und in der Lage ist, die Konstanten der Eichung der Vorrichtung und die vom Transmitter (9) kommenden Signale zu speichern und weiterhin in der Lage ist, die Einrichtungen zur Verarbeitung dieser Daten zu speichern.

10. Vorrichtung nach Anspruch 6, worin der. Prozessor (11) einen Drucker (12) aufweist, der in der Lage ist, die vom Prozessor ermittelten Daten darzustellen, sowie eine peripher angeordnete Einheit (13) zum Aufzeichnen, Addieren und Berechnen der Ergebnisse.

**Revendications**

1. Procédé pour la pesée d'une charge préalablement soulevée par un dispositif actionné par au moins un vérin hydrodynamique qui comporte les différentes étapes réalisées dans un appareil comportant une table de calibration lesdites étapes étant les suivantes:

on détermine la valeur de la pression d'actionnement du vérin à l'extrémité de la phase de levage de la charge, on emmagasine ladite valeur de la pression dans un processeur de données;

on abaisse la charge à la fin de la phase de levage selon des accroissements faibles;

on réalise à la fin de chaque accroissement, après un délai compris entre 1 et 2 secondes, au moins 16 déterminations de la valeur de la pression et on transmet lesdites valeurs au processeur;

on sélectionne mathématiquement et on réalise une moyenne desdites au moins 16 valeurs de la pression en groupes d'au moins 2 pour obtenir au moins 8 valeurs décroissantes

on effectue une moyenne des huit valeurs pour obtenir une valeur et on rejette cette valeur lorsqu'elle diffère d'une quantité supérieure en pourcent à la valeur prédéterminée par chacune desdites huit valeurs;

on répète ladite procédure à la fin de chaque accroissement en effectuant une moyenne des valeurs acceptées de façon à obtenir une moyenne et on compare ladite moyenne par intrapolation avec la table de calibration dudit appareil.

2. Procédé selon la revendication 1 dans lequel la durée de chaque accroissement est indépendante de la charge et est comprise entre 80 et 800 millisecondes.

3. Procédé selon la revendication 1 dans lequel la durée de chaque accroissement dépend de la charge et de l'équation qui régit la durée de chaque accroissement exprimée en millisecondes et la pression exprimée en bar du vérin à la fin de la phase de levage est:

$$T = h - k \cdot P$$

dans laquelle

T est la durée de chaque accroissement en millisecondes,

h est une constante exprimée en millisecondes qui est comprise entre 500 et 2000,

k est une constante exprimée en millisecondes/bar et est comprise entre 1 et 36 et

P est la pression en bar.

4. Procédé selon la revendication 1 dans lequel la valeur en pourcentage de la valeur maximale prédéterminée rejetée en tant qu'acceptable est 1,2%.

5. Procédé selon la revendication 1 dans lequel au cours de la phase d'abaissement de la charge, un freinage hydraulique est réalisé de telle sorte que les pertes de charge soient maintenues constantes aussi bien pour des poids très faibles que pour des poids importants.

6. Appareil pour assurer le levage d'une charge préalablement soulevée par un dispositif de levage qui comporte un vérin hydrodynamique (1), une conduite (3) reliée audit vérin pour l'alimenter et le vidanger, une conduite (4) reliée en parallèle par rapport à ladite conduite (3), une valve (5), un col (6), et un transducteur de pression (9), un processeur (11) étant disposé sur ladite conduite (4), ledit processeur 11 étant susceptible de recevoir par l'intermédiaire d'un convertisseur, les valeurs de la pression déterminées par ledit transducteur (9) étant susceptibles de traiter lesdites valeurs et de déterminer la valeur du poids de la charge.

7. Appareil selon la revendication 6 dans lequel ledit processeur (11) commande l'ouverture et la fermeture de ladite valve (5).

8. Appareil selon la revendication 6 dans lequel ledit transducteur (9) est un transducteur électrique susceptible de convertir les valeurs de la pression en signaux proportionnels en tension ou courant.

9. Appareil selon la revendication 6 dans lequel ledit processeur (11) comporte des moyens pour emmagasiner les données physicogéométriques du groupe de levage (1) et est susceptible d'emmagasiner les constantes de calibration dudit appareil et les signaux transmis par ledit transducteur (9) et est susceptible d'emmagasiner les moyens de traitement desdites données.

10. Appareil selon la revendication 6 dans lequel ledit processeur (11) comporte un élément d'impression (12) susceptible de montrer les résultats du processeur mis en oeuvre aussi bien qu'une unité (13) disposée en périphérie susceptible d'enregistrer, de totaliser et de calculer les résultats.

Fig.1.

EP 0 246 363 B1

*Fig.2.*

*Fig.3.*

2